# EUROPEAN PATENT APPLICATION

(11) **EP 4 711 142 A1**
(43) Date of publication of application: **18.03.2026**
(21) Application number: 25200620.0
(22) Date of filing: 05.09.2025
(51) Int. Cl.: B41J 2/21, B41J 11/00

(54) **INKJET RECORDING APPARATUS**

(30) Priority: 09.09.2024 JP 2024155118
(71) Applicant: KYOCERA Document Solutions Inc., Osaka-shi, Osaka 540-8585 (JP)
(72) Inventor: FUNAKOSHI, Daichi, Osaka-shi, Osaka, 540-8585 (JP); KIDA, Yukari, Osaka-shi, Osaka, 540-8585 (JP)
(74) Representative: Heuer, Wilhelm

(57) **Abstract**

An inkjet recording apparatus (100) at least includes a conveyance portion (1), an application portion (2), a first drying portion (5), a recording portion (3), and a second drying portion (6). The first drying portion (5) dries white ink applied to a recoding medium (S) by the application portion (2). The recording portion (3) ejects non-white ink onto the recording medium (S) having passed through the first drying portion (5). The second drying portion (6) dries the non-white ink applied to the recoding medium (S) by the recording portion (3). The white ink contains first resin particles with a first minimum film formation temperature of 40°C to 80°C. The non-white ink contains second resin particles with a second minimum film formation temperature of 80°C or less. The drying temperature is, in the first drying portion (5), lower than the first minimum film formation temperature and, in the second drying portion (6), equal to or higher than the first and second minimum film formation temperatures.

## Description

### BACKGROUND

The present disclosure relates to an inkjet recording apparatus that records images by ejecting ink onto a recording medium.

As recording apparatuses such as facsimile machines, copiers, and printers, inkjet recording apparatuses, which record images by ejecting ink onto a recording medium, are widely used for their capability of forming high-definition images.

In such inkjet recording apparatuses, aqueous pigment ink that uses a pigment as a colorant for its excellent weather resistance is the mainstream. Inconveniently, aqueous pigment ink has a drawback of, when ejected onto a recoding medium with low wettability such as a plastic sheet, being prone to cause repelling of and blotting with the ink.

To cope with that, a method has been presented in which a background layer is formed using ink (white ink) for a lower layer and on top of it an image is formed (overlaid) using ink (non-white ink) for an upper layer, thereby preventing blotting with ink and forming an image with satisfactory durability.

### SUMMARY

An object of the present disclosure is to provide an inkjet recording apparatus that can prevent blotting with non-white ink due to insufficient drying of white ink applied to a recoding medium and that can improve the abrasion resistance of ink after printing.

According to one aspect of the present disclosure, an inkjet recording apparatus at least includes a conveyance portion, an application portion, a first drying portion, a recording portion, and a second drying portion. The conveyance portion conveys a recording medium. The application portion applies white ink to the recoding medium conveyed by the conveyance portion. The first drying portion is arranged downstream of the application portion with respect to the conveyance direction of the recoding medium and dries the white ink applied to the recoding medium by the application portion. The recording portion is arranged downstream of the first drying portion with respect to the conveyance direction of the recoding medium and ejects non-white ink onto the recording medium. The second drying portion is arranged downstream of the recording portion with respect to the conveyance direction of the recoding medium and dries the non-white ink applied to the recoding medium by the recording portion. The white ink contains first resin particles with a minimum film formation temperature of 40°C or more but 80°C or less. The non-white ink contains second resin particles with a minimum film formation temperature of 80°C or less. When the minimum film formation temperatures of the first and second resin particles are a first and a second minimum film formation temperature respectively, the drying temperature in the first drying portion is lower than the first minimum film formation temperature and the drying temperature in the second drying portion is equal to or higher than the first and second minimum film formation temperatures.

### BRIEF DESCRIPTION OF THE DRAWINGS

Fig. 1 is a schematic diagram showing the structure of an inkjet recording apparatus 100 according to a first embodiment of the present disclosure.
Fig. 2 is an enlarged view of and around an application portion 2, a recording portion 3, and a first drying portion 5 in Fig. 1.
Fig. 3 is a schematic diagram showing the structure of an inkjet recording apparatus 100 according to a second embodiment of the present disclosure.

### DETAILED DESCRIPTION

An embodiment of the present disclosure will be described in detail below. In the following description, a compound and its derivatives may be comprehensively referred to by appending "-based" to the name of the compound. When "-based" is appended to the name of a compound to denote the name of a polymer, it means that the repeating unit of the polymer is derived from any the compound and its derivatives. Acrylic and methacrylic may be comprehensively referred to as "(meth)acrylic." Acryloyl (CH₂=CH-CO-) and methacryloyl (CH₂=C(CH₃)-CO-) may be comprehensively referred to as "(meth)acryloyl."

Ink used in an inkjet recording apparatus of the present disclosure is aqueous ink that contains a pigment dispersion containing a pigment and a pigment-dispersed resin along with a binder resin, a water-soluble organic solvent, and water, and can be white ink or ink of any color other than white (hereinafter, also referred to as non-white ink). The white ink and non-white ink used in the inkjet recording apparatus of the present disclosure will be described in detail below.

### [1. White Ink]

The white ink used in an inkjet recording apparatus of the present disclosure forms a background image by being applied to a plastic sheet as a recording medium to adjust the wettability of the sheet to prevent blotting with ink when an image is formed by the inkjet recording apparatus using non-white ink. The white ink contains at least a white pigment, a binder resin, and an aqueous solvent. Preferably, the white ink further contains a pigment-dispersed resin.

### (White Pigment)

Examples of white pigments include C.I. Pigment White 4, C.I. Pigment White 5, C.I. Pigment White 6, C.I. Pigment White 6:1, C.I. Pigment White 7, C.I. Pigment White 18, C.I. Pigment White 19, C.I. Pigment White 20, C.I. Pigment White 21, C.I. Pigment White 23, C.I. Pigment White 24, C.I. Pigment White 25, C.I. Pigment White 26, C.I. Pigment White 27, and C.I. Pigment White 28. Titanium oxide may also be used as a white pigment.

From the viewpoint of satisfactory discharging of white ink from a recording head 3e, the content proportion of the white pigment in the white ink is preferably 0.1 mass% or more but 30 mass% or less, and more preferably 10 mass% or more but 20 mass% or less.

### (Pigment-Dispersed Resin)

The pigment-dispersed resin (pigment-coated resin) is a resin that is soluble in the aqueous solvent of the ink. Part of the pigment-dispersed resin is present, for example, on the surface of the pigment particles and optimizes the dispersiveness of the pigment particles. Part of the pigment-dispersed resin is present, for example, in a form dissolved in the aqueous solvent of the ink.

The pigment-dispersed resin is preferably styrene-(meth)acrylic resin. Styrene-(meth)acrylic resin has, along with a styrene unit, a repeating unit derived from at least one monomer among (meth)acrylic acid alkyl esters and (meth)acrylic acids. Examples of (meth)acrylic acid alkyl esters include methyl (meth)acrylate, ethyl (meth)acrylate, propyl (meth)acrylate, and butyl (meth)acrylate. The styrene-(meth)acrylic resin is preferably a copolymer of styrene, methyl methacrylate, methacrylic acid, and butyl acrylate.

In the white ink, the content proportion of the pigment-dispersed resin is preferably 0.1 mass% or more but 4.0 mass% or less, and more preferably 0.5 mass% or more but 1.5 mass% or less. Setting the content proportion of the pigment-dispersed resin to 0.1 mass% or more but 4.0 mass% or less gives the white ink satisfactory ejection stability when ejected by the inkjet method.

In the white ink, the amount of pigment-dispersed resin contained in 100 mass parts of the pigment is preferably 10 mass parts or more but 60 mass parts or less, and more preferably 20 mass parts or more but 30 mass parts or less. Setting the contained amount of pigment-dispersed resin to 10 mass parts or more but 60 mass parts or less helps optimize the ejection stability of the ink.

### (Binder Resin)

The binder resin is added for the purpose of fixing the white ink to the recoding medium. The white ink contains, as the binder resin, resin particles with a minimum film formation temperature (MFT) of 40 to 80°C (hereinafter, referred to as the first resin particles). The minimum film formation temperature was measured in accordance with the ASTM D2354 test method using a measuring device (MFFTB90, produced by Rhopoint Instruments).

If the minimum film formation temperature of the first resin particles contained in the white ink (hereinafter, referred to as the first minimum film formation temperature) is too low, the first resin particles starts to form a film early. As a result, the film of the first resin particles acts like a lid over the white ink, preventing the drying of the white ink. By contrast, if the first minimum film formation temperature is too high, in the drying process after non-white ink ejection, the recording medium needs to be heated to a high temperature to make the first resin particles contained in the white ink form a film, and this may damage the quality of a heat-sensitive recording medium such as OPP sheets. The first minimum film formation temperature is preferably 40°C or more but 80°C or less.

### (Resin Particles)

While the first resin particles added to the white ink are not particularly limited as long as they are resin particles with a minimum film formation temperature of 40 to 80°C, urethane resin particles are preferred. Usable as the urethane resin particles are anionic urethane resin particles, nonionic urethane resin particles, and cationic urethane resin particles. Anionic urethane resins are urethane resins that have anionic properties. Cationic urethane resins are urethane resins that have cationic properties. Nonionic urethane resins are urethane resins that have neither anionic nor cationic properties.

The content proportion of urethane resin in the first resin particles is preferably 80 mass% or more, more preferably 90 mass% or more, and even more preferably 100 mass%.

The volume median diameter of the first resin particles is preferably 10 nm or more but 100 nm or less, and more preferably 10 nm or more but 50 nm or less. By setting the volume median diameter of the first resin particles to 10 nm or more, the storage stability of the white ink can be optimized. By setting the volume median diameter of the first resin particles to 100 nm or less, the ejection stability of the white ink can be optimized.

The content proportion of first resin particles in the white ink is preferably 2.0 mass% or more but 15.0 mass% or less, more preferably 4.0 mass% or more but 10.0 mass% or less. By setting the content proportion of the first resin particles to 2.0 mass% or more, the adhesion properties of the image formed with ink to the recording medium can be optimized. By setting the content proportion of the first resin particles to 15.0 mass% or less, the application properties of the white ink can be optimized. Also the ejection stability of the white ink applied to the recording medium by an inkjet method can be optimized.

### (Water-soluble organic solvent)

The water-soluble organic solvent is added to increase compatibility with the binder resin and to retain water in the white ink. Thus, when the moisture in the white ink evaporates in a nozzle for ejecting the white ink or in an application device, it is possible to suppress an increase in the viscosity of the white ink and, when the white ink is applied by the inkjet method, it is possible to prevent ejection failure or bent ejection from the nozzle and the like. It is thus possible to keep ejection stability.

The water-soluble organic solvent added to the white ink is not particularly limited as long as it has compatibility with the binder resin. Examples of the water-soluble organic solvent that can be used in the white ink include glycol compounds, glycol ether compounds, lactam compounds, nitrogen-containing compounds, acetate compounds, 1,4-dioxane, thiodiglycol, glycerin, and dimethyl sulfoxide.

Examples of glycol compounds include ethylene glycol, 1,3-propanediol, propylene glycol, 1,2-pentanediol, 1,5-pentanediol, 1,2-octanediol, 1,8-octanediol, 3-methyl-1,3-butanediol, 3-methyl-1,5-pentanediol, diethylene glycol, triethylene glycol, and tetraethylene glycol.

Examples of glycol ether compounds include diethylene glycol diethyl ether, diethylene glycol monobutyl ether, ethylene glycol monomethyl ether, ethylene glycol monobutyl ether, diethylene glycol monomethyl ether, diethylene glycol monoethyl ether, diethylene glycol diethyl ether, dipropylene glycol monomethyl ether, triethylene glycol monomethyl ether, triethylene glycol monoethyl ether, triethylene glycol monobutyl ether, and propylene glycol monomethyl ether.

Examples of lactam compounds include 2-pyrrolidone and N-methyl-2-pyrrolidone.

Examples of nitrogen-containing compounds include 1,3-dimethylimidazolidinone, formamide, and dimethylformamide.

Examples of acetate compounds include diethylene glycol monoethyl ether acetate.

As the water-soluble organic solvent, a glycol compound or a glycol ether compound is preferred, and 1,3-propanediol, propylene glycol, triethylene glycol monobutyl ether (butyl triglycol), dipropylene glycol monomethyl ether, or 1,4-dioxane is more preferred. In particular, adding 1,4-dioxane, which is water-soluble and low in polarity, is preferred because it increases compatibility with the resin particles and improves the abrasion resistance of the print result, as will be mentioned in connection with practical examples later.

While the amount of water-soluble organic solvent added is not particularly limited, it is preferably 5 to 40 mass% of the entire white ink, and more preferably 10 to 35 mass%. With 5 to 40 mass% added, sufficient moisture is retained in the white ink and its viscosity is not too high. This allows effective application to the recording medium.

### (Surfactant)

Preferably, the white ink contains a surfactant. The surfactant optimizes the compatibility and dispersion stability of the components of the ink. The surfactant also optimizes the wettability of the ink on the recording medium. Usable as the surfactant in the white ink are various surfactants such as silicone-based surfactants, nonionic surfactants, anionic surfactants, cationic surfactants, and betaine-based surfactants, among which nonionic surfactants are preferred. Among those surfactants, one type may be used singly or two or more types may be used in combination.

Examples of nonionic surfactants in white ink include acetylene glycol-based surfactants (surfactants containing acetylene glycol compounds), silicone-based surfactants (surfactants containing silicone compounds), and fluorine-based surfactants (surfactants containing fluoropolymers or fluorine-containing compounds). Examples of acetylene glycol-based surfactants include ethylene oxide adducts of acetylene glycol and propylene oxide adducts of acetylene glycol. Preferably, the ink contains a silicone-based surfactant.

The amount of surfactant added is preferably 0.001 to 5 mass% of the entire white ink, and more preferably 0.05 to 2 mass%. 0.001 mass% or more of it achieves the effect of adding the surfactant. On the other hand, adding more than 5 mass% of it is not expected to increase the effect.

### (Water)

The white ink used in the present disclosure is aqueous and contains water as an essential component. The water contained in the white ink is not particularly limited within the scope consistent with the object of the present disclosure and water of desired purity such as purified water or ion-exchange water can be selected as appropriate. The water content of the white ink is not particularly limited within the scope consistent with the object of the present disclosure and can be changed as appropriate according to the amounts of other components used described above. The water content of the white ink is preferably 40 to 60 mass% of the total mass of the white ink.

The white ink of the present disclosure may contain, as necessary, materials known to be used in inks, such as a foam suppressor, a pH adjuster, an antiseptic mildewproofing agent, a rust inhibitor, a dissolution stabilizer, a drying inhibitor, an antioxidant, and a viscosity adjuster.

### (Foam Suppressor)

The foam suppressor is added to suppress the foaming of the ink. In general, a liquid with a high surface tension such as water is difficult to foam because of the force acting to make the surface area of the liquid as small as possible; a liquid with a low surface tension and a high viscosity easily foams and the produce foam is difficult to defoam. The amount of foam suppressor added is preferably 0.01 to 10 mass%, and more preferably 0.02 to 5 mass%. Adding 0.01 mass% or more achieves a sufficient effect of suppressing foam. With 10 mass% or less, the foam suppressor remains fully soluble in the ink.

### (pH Adjuster)

The pH adjuster is not particularly limited and can be selected as appropriate to suit the purpose so long as it can adjust the pH value to six to ten without adversely affecting the ink. With a pH value of six or higher, conveyance components such as conveyance rollers that make contact with the ink are less likely to corrode.

Examples of preferable pH adjusters include alcohol amines, alkali metal hydroxides, ammonium hydroxides, phosphonium hydroxides, and alkali metal carbonates. Examples of alcohol amines include diethanolamine, triethanolamine, and 2-amino-2-ethyl-1,3-propanediol. Examples of alkali metal hydroxides include lithium hydroxide, sodium hydroxide, and potassium hydroxide. Examples of ammonium hydroxides include ammonium hydroxide and quaternary ammonium hydroxides. Examples of phosphonium hydroxides include quaternary phosphonium hydroxides. Examples of alkali metal carbonates include lithium carbonate, sodium carbonate, and potassium carbonate.

### (Antiseptic Mildewproofing Agent)

Suitably usable as the antiseptic mildewproofing agent are, for example, sodium dehydroacetate, sodium sorbate, sodium 2-pyridinethiol-1-oxide, sodium benzoate, sodium pentachlorophenol, and sodium 1,2-benzoisothiazolin-3-one.

### (Rust Inhibitor)

Suitably usable as the rust inhibitor are, for example, acidic sulfites, sodium thiosulfate, ammonium thiodiglycolate, diisopropyl ammonium nitrite, dicyclohexyl ammonium nitrite, pentaerythritol tetranitrate, and 1,2,3-benzotriazole.

The white ink of the present disclosure obtained as described above is applied by the inkjet method to the recoding medium before being subjected to recording with aqueous ink (pigment ink) to form a background image on the recording medium to improve the wettability (wet tension) of the surface of the recoding medium. This helps prevent repelling of and blotting with the non-white ink ejected onto the recoding medium.

The amount of white ink applied (the amount deposited) is not particularly limited, but if the amount applied is less than 1 g/m², the wettability (wet tension) of the surface of the recording medium cannot be sufficiently improved and the effect of preventing repelling of and blotting with non-white ink is insufficient. In contrast, if the amount applied is more than 20 g/m², the wettability (wet tension) of the surface of the recording medium is too high and the white ink does not dry in time, so it may cause blotting with non-white ink. Thus, the amount of white ink applied is preferably 1 g/m² or more but 20 g/m² or less, and more preferably 5 g/m² or more but 10 g/m² or less.

### [2. Non-White Ink]

The non-white ink used in the inkjet recording apparatus of the present disclosure, like the white ink, contains at least a pigment, a binder resin, and an aqueous solvent. Preferably, the ink further contains a pigment-dispersed resin.

### (Pigment)

In the non-white ink, the pigment constitutes, for example, pigment particles together with the pigment-dispersed resin. The pigment particle is composed of, for example, a core containing the pigment and the pigment-dispersed resin that coats the core. The pigment-dispersed resin is present, for example, in a form dispersed in a solvent. From the viewpoint of optimizing the color density, hue, or stability of the non-white ink, the volume median diameter of the pigment particles is preferably 30 nm or more but 200 nm or less, and more preferably 70 nm or more but 130 nm or less.

Examples of the pigment include yellow, orange, red, blue, purple, and black pigments. Examples of yellow pigments include C.I. Pigment Yellow (74, 93, 95, 109, 110, 120, 128, 138, 139, 151, 154, 155, 173, 180, 185, and 193). Examples of orange pigments include C.I. Pigment Orange (34, 36, 43, 61, 63, and 71). Examples of red pigments include C.I. Pigment Red (122 and 202). Examples of blue pigments include C.I. Pigment Blue (15, more specifically, 15:3). Examples of purple pigments include C.I. Pigment Violet (19, 23, and 33). Examples of black pigments include C.I. Pigment Black (7).

The content proportion of the pigment in the non-white ink is preferably 0.5 mass% or more but 10.0 mass% or less, and more preferably 1.5 mass% or more but 5.0 mass% or less. With the content proportion of the pigment set to 0.5 mass% or more, the non-white ink can form images with the desired image density. With the content proportion of the pigment set to 10 mass% or less, the ink has satisfactory fluidity.

### (Binder Resin)

The non-white ink contains resin particles with a minimum film formation temperature (MFT) of 35 to 80°C (hereinafter, referred to as the second resin particles) as the binder resin. If the minimum film formation temperature of the second resin particles in the non-white ink (hereinafter referred to as the second minimum film formation temperature) is too low, the resin particles form a film in a normal-temperature environment, resulting in non-white ink ejection failure. By contrast, if the second minimum film formation temperature is too high, in the drying process after non-white ink ejection, the recording medium needs to be heated to a high temperature to make the resin particles contained in the non-white ink form a film, and this may damage the quality of a heat-sensitive recording medium such as OPP sheets. The second minimum film formation temperature is preferably 35°C or more but 80°C or less.

### (Resin Particles)

While the second resin particles added to the non-white ink are not particularly limited as long as they are resin particles with a minimum film formation temperature of 35 to 80°C, urethane resin particles similar to the first resin particles added to the white ink are preferred. Usable as the urethane resin particles are anionic urethane resin particles, nonionic urethane resin particles, and cationic urethane resin particles. Anionic urethane resins are urethane resins that have anionic properties. Cationic urethane resins are urethane resins that have cationic properties. Nonionic urethane resins are urethane resins that have neither anionic nor cationic properties.

The content proportion of urethane resin in the second resin particles is preferably 80 mass% or more, more preferably 90 mass% or more, and even more preferably 100 mass%.

The content proportion of the second resin particles in the non-white ink is preferably 2.0 mass% or more but 15.0 mass% or less, and more preferably 4.0 mass% or more but 10.0 mass% or less. By setting the content proportion of the second resin particles to 2.0 mass% or more, the adhesion properties of the image formed with the non-white ink to the recording medium can be optimized. By setting the content proportion of the second resin particles to 15.0 mass% or less, the application properties of the non-white ink can be optimized. Also the ejection stability of the non-white ink applied to the recording medium by an inkjet method can be optimized.

Other components of the non-white ink, such as the aqueous solvent and the pigment-dispersed resin, and the appropriate amounts of them added are similar to those for the white ink described above.

### [3. Image Recording Method]

Next, an image recording method using an inkjet recording apparatus of the present disclosure will be described. The inkjet recording apparatus used in the image recording method of the present disclosure is not particularly limited: a serial-head or line-head inkjet recording apparatus can be used. In particular, on an inkjet recording apparatus using aqueous pigment ink, using a plastic sheet as a recoding medium tends to cause repelling of and blotting with ink, but these problems are less likely to occur with the image recording method of the present disclosure.

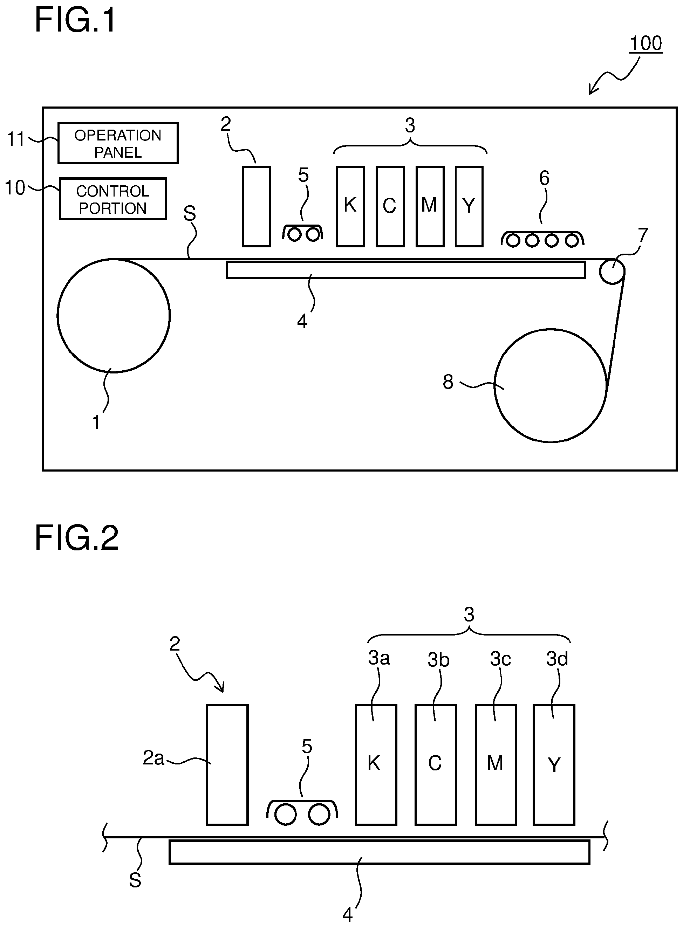

Fig. 1 is a schematic diagram showing the structure of an inkjet recording apparatus 100 according to a first embodiment of the present disclosure. Fig. 2 is an enlarged view of and around an application portion 2, a recording portion 3, and a first drying portion 5 in Fig. 1. As shown in Fig. 1, the inkjet recording apparatus 100 includes a sheet reel-out portion 1, the application portion 2, the recording portion 3, a conveyance plate 4, the first drying portion 5, a second drying portion 6, a sheet reel-in portion 7, a control portion 10, and an operation panel 11.

A sheet S, which is an elongate printing base material (here, a plastic sheet), is arranged in the sheet reel-out portion 1 provided upstream (left in Fig. 1) of the recording portion 3 in the conveyance direction. The sheet reel-out portion 1 includes a rotation shaft on which a sheet S in the form of a roll is mounted and a motor that drives the rotation shaft to rotate in a predetermined rotation direction (neither is shown). The sheet S is reeled out downstream (rightward in Fig. 1) in the conveyance direction as the rotation shaft rotates by being driven by the motor.

The application portion 2 is arranged downstream (to the right in Fig. 1) of the sheet reel-out portion 1 in the sheet conveyance direction. The application portion 2 includes a first recording head 2a. The first recording head 2a has a similar structure to second recording heads 3a to 3d of the recording portion 3, which will be described later, and ejects the white ink, described previously, by the inkjet method onto the sheet S reeled out from the sheet reel-out portion 1.

The recording portion 3 is arranged downstream (to the right in Fig. 1) of the application portion 2 in the sheet conveyance direction. The recording portion 3 includes second recording heads 3a, 3b, 3c, and 3d. The second recording heads 3a to 3d are supplied with, according to the colors for which they are intended, non-white inks of four colors (yellow, magenta, cyan, and black) stored in ink tanks (not shown) respectively. Using the second recording heads 3a to 3d, the recording portion 3 records an image on the sheet S reeled out from the sheet reel-out portion 1 and then having the white ink applied to it by the application portion 2.

Below the application portion 2 and the recording portion 3, the conveyance plate 4 is arranged. The sheet S reeled out from the sheet reel-out portion 1 is supported by the conveyance plate 4 at a predetermined interval from the application portion 2 and the recording portion 3.

Between the application portion 2 and the recording portion 3, the first drying portion 5 is arranged. For example, the first drying portion 5 is a known drying device such as a hot-air drying device (dryer) that blows out hot air. Blowing hot air onto the sheet S conveyed while being supported by the conveyance plate 4 dries the white ink applied to the sheet S by the application portion 2.

During the drying (first drying process) by the first drying portion 5 after the application of the white ink, if the first resin particles contained in the white ink start to form a film early, it acts like a lid over the surface of the white ink and prevents the drying of the white ink. Thus, the drying temperature of the white ink in the first drying portion 5 is set to be lower than the first minimum film formation temperature of the first resin particles in the white ink. As a result, in the first drying process, the first resin particles do not form a film, so the drying of the white ink is not prevented.

The second drying portion 6 is arranged downstream (to the right in Fig. 1) of the recording portion 3 in the sheet conveyance direction. For example, the second drying portion 6 is configured as a hot-air drying device similar to the first drying portion 5. The ink ejected from the recording portion 3 onto the sheet S is dried while passing through the second drying portion 6 and the ink is thus fixed to the sheet S.

During the drying (second drying process) by the second drying portion 6 after the ejection of the ink, the drying temperature in the second drying portion 6 is higher than the higher of the first minimum film formation temperature of the first resin particles in the white ink and the second minimum film formation temperature of the second resin particles in the non-white inks, that is, higher than either of the first and second minimum film formation temperatures. As a result, in the second drying process, when the second resin particles contained in the non-white inks start form a film, also the first resin particles contained in the white ink start to form a film simultaneously. It is thus possible to obtain good adhesion and abrasion resistance of ink to the sheet S.

The drying temperature in the second drying portion 6 is lower than the temperature at which the sheet S may deteriorate. For example, if the sheet S is a biaxially oriented polypropylene (OPP) sheet, setting the drying temperature in the second drying portion 6 lower than 80°C prevents twisting (thermal deformation) of the OPP sheet and thereby prevents quality deterioration.

If the first and second drying portions 5 and 6 are hot-air drying devices, the wind velocity of the hot air blown from the first and second drying portions 5 and 6 is preferably 0.5 m/sec or more but 1 m/sec or less. More preferably, a slit in a drying nozzle (the part through which the hot air blows out) is 1 to 5 mm, and the distance from the printed result to the drying nozzle is 5 to 10 mm.

In this embodiment, the hot-air dryer is used as the first and second drying portions 5 and 6 to dry the white and non-white inks, but any other drying device can be used as the first and second drying portions 5 and 6. For example, they can be configured with a heater and a reflection plate (reflector). As the heater, an infrared heater, a halogen heater, a ceramic heater, highfrequency induction heating (IH), or the like, can be used.

The sheet S having passed through the second drying portion 6 and having the ink fixed to it has its conveyance direction changed by a guide roller 7 and is then reeled into the form of a roll by the sheet reel-in portion 8.

The control portion 10 controls the ejection of white ink in the application portion 2 and the ejection of non-white inks in the recording portion 3 according to image data received from an external computer. The control portion 10 determines whether to eject the white ink and the amount of it to eject in the application portion 2 as will be described later.

The operation panel 11 functions as a touch panel for the user to make various settings and inputs for the inkjet recording apparatus 100, while it also displays the status of the inkjet recording apparatus 100, the progress of image recording, the number of sheets printed, and the like.

The control portion 10 determines whether to apply the white ink and the amount of it to apply in the application portion 2 according to the wet tension of the sheet S. Specifically, a table that defines the correspondence between different types of sheet S and their surface tensions (wet tensions) is stored in a storage portion (not shown) in advance. At the start of printing, the type of sheet S to be used is input from the operation panel 11 on the inkjet recording apparatus 100. The control portion 10 reads the surface tension corresponding to the input type of sheet S from the table stored in the storage portion and determines whether to apply the white ink and the amount of it to apply in the application portion 2 based on the read surface tension.

It is thus possible to adjust the wet tension of the sheet S within an optimal range and thus to prevent repelling of and blotting with ink to obtain satisfactory images. If the wet tension of the sheet S is high, no white ink is applied, so it is possible to prevent unnecessary consumption of the white ink.

When the surface tension of the sheet S is 45 mN/m or less, it is preferable to apply the white ink to the sheet S in the application portion 2. Preferably, as the surface tension of the sheet S decreases, the amount of white ink to apply is increased.

With the image recording method described above, to the sheet S before the inkjet recording apparatus 100 forms an image on it with aqueous pigment ink, the white ink containing first resin particles is applied. This improves the wettability (wet tension) of the sheet to prevent repelling of and blotting with aqueous ink and thereby to enhance image quality. It is thus possible to use the image recording method of the present disclosure suitably on various inkjet recording apparatuses that use aqueous ink.

Setting the drying temperature in the first drying portion 5 lower than the first minimum film formation temperature helps prevent the first resin particles in the white ink from forming a film early and thereby promote the drying of the white ink. Setting the drying temperature in the second drying portion 6 higher than the higher of the first and second minimum film formation temperatures of the first and second resin particles helps make the first and second resin particles in the white and non-white inks reliably form a film and thereby obtain good adhesion and abrasion resistance of the inks to the sheet S.

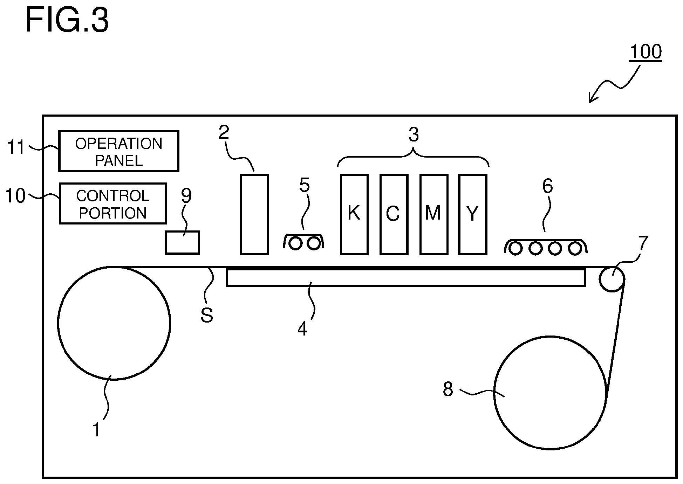

Fig. 3 is a schematic diagram showing the structure of an inkjet recording apparatus 100 according to a second embodiment of the present disclosure. In this embodiment, a corona discharge device 9 is provided that applies corona treatment to the sheet S. In other respects, the structure of the inkjet recording apparatus 100 here is similar to that of the first embodiment shown in Figs. 1 and 2.

The corona discharge device 9 is arranged upstream (to the left in Fig. 3) of the application portion 2 in the sheet conveyance direction. The corona discharge device 9 performs corona discharge treatment on the sheet S to adjust the wet tension of the sheet S. Applying corona treatment to the sheet S gives a white ink ejected from the application portion 2 good adhesion and abrasion resistance to the sheet S.

The present disclosure can be implemented in any manner other than as in the embodiments described above, and allows for any modifications within the scope defined in the appended claims. For example, while Figs. 1 and 3 illustrate an inkjet recording apparatus 100 that ejects ink while reeling out an elongate sheet S in the form of a roll at a predetermined speed, the present disclosure is applicable equally to an inkjet recording apparatus that ejects ink onto sheets cut in a predetermined shape.

While the above embodiments deal with a configuration where the white ink is ejected by the inkjet method from a first recording head 2a, it can be applied by any method other than the inkjet method, for example, by a spray method, as long as it can be applied evenly to the sheet S.

In the above embodiments, the first drying portion 5 is arranged closely downstream of the application portion 2 that ejects the white ink and the second drying portion 6 is arranged closely downstream of the recording portion 3 that ejects the non-white inks. This, however, is not meant as any limitation. For example, a third drying portion may be arranged downstream of the second drying portion 6 to perform a third drying process after the second drying process. If the recording portion 3 has a plurality of recording heads 3a to 3d, the second drying portion 6 may be arranged closely downstream of each of the recording heads 3a to 3d.

The material of the recording medium is not limited to plastic film; it can be any of a variety of recording media including paper such as plain paper and coated paper and fabrics such as natural or synthetic fiber fabric, knitted fabric, or non-woven fabric. The effects of the present disclosure will be described more specifically below by way of examples, which, however, are not meant to restrict the present disclosure.

### EXAMPLES

### [Production Example 1]

### (Production of White Ink)

White Inks I-1 to I-7 and non-white ink were produced by the following method. First, the commercially available resin particle dispersion liquids (dispersions) for ink that were used in the preparation of the white and non-white inks will be described below. The details of each resin particle dispersion liquid for ink are shown in Table 1.

### (1-1. Resin Particle Dispersion Liquids for Ink)

A-1: Superflex 820 (produced by DKS Co., Ltd.)
A-2: Superflex 130 (produced by DKS Co., Ltd.)
A-3: Superflex 420NS (produced by DKS Co., Ltd.)
A-4: Superflex 870 (produced by DKS Co., Ltd.)
B-1: UC-6600 (produced by Saiden Chemical Industry Co., Ltd.)
C-1: Seporjon NE205 (produced by Sumitomo Seika Chemicals Co., Ltd.)

**[Table 1]**

| Resin Particle Dispersion Liquid | Property | Solid Content [mass%] | Particle Diameter [*µ*m] | MFT[°C] |
|---|---|---|---|---|
| A-1 | Anionic | 30±1 | 0.03 | 40 |
| A-2 | Anionic | 35±1 | 0.03 | 55 |
| A-3 | Anionic | 32±1 | 0.01 | 65 |
| A-4 | Anionic | 30±1 | 0.03 | 70 |
| B-1 | - | 46 | 0.12 | 85 |
| C-1 | - | 40 | 2.5 | 140 |

### (1-2. Preparation of Pigment Dispersion)

75 g of pigment-dispersed resin (DISPERBYK-190, produced by BYC Chemie Japan; non-volatile content: 40 mass%, dispersant: water) was diluted with 775 g of ion-exchange water, and 150 g of white pigment (JR-804, produced by Tayca Corporation) was added. The mixture was then preliminarily mixed using a Homo Disper at a rotation rate of 5000 rpm for 1 hour. The mixture was then subjected to dispersion using a bead mill (produced by Nippon Coke & Engineering Co., Ltd.) to obtain a white pigment dispersion. The vessel was loaded with zirconia beads (0.2 mmφ) at a filling ratio of 80% to its volume.

### (1-3. Preparation of White Ink)

Components including the resin particle dispersion liquids shown in Table 1 were, in the amounts shown in Table 2, stirred and mixed by a method similar to that for Production Example 2, which will be described later, to prepare White Inks I-1 to I-7. In Table 2, "Surfactant" refers to a polyether-modified silicone surfactant (SAG503A, produced by Nisshin Chemical Industry Co., Ltd.), "PG" refers to propylene glycol, "BTG" refers to butyl triglycol, and "DO" refers to 1,4-dioxane.

**[Table 2]**

| | | I-1 | I-2 | I-3 | I-4 | I-5 | I-6 | I-7 |
|---|---|---|---|---|---|---|---|---|
| White Pigment Dispersion | | 13 | 13 | 13 | 13 | 13 | 13 | 13 |
| ResinParticle Dispersion Liquid | A-1 | 5 | - | - | - | - | - | 5 |
| | A-2 | - | 5 | - | - | - | - | - |
| | A-3 | - | - | 5 | - | - | - | - |
| | A-4 | - | - | - | 5 | - | - | - |
| | B-1 | - | - | - | - | 5 | - | - |
| | C-1 | - | - | - | - | - | 5 | - |
| Water-Solble Organic Solvent | PG | 25 | 25 | 25 | 25 | 25 | 25 | 20 |
| | BTG | 8 | 8 | 8 | 8 | 8 | 8 | 8 |
| | DO | - | - | - | - | - | - | 5 |
| Surfactant | | 0.5 | 0.5 | 0.5 | 0.5 | 0.5 | 0.5 | 0.5 |
| Water | | 48.5 | 48.5 | 48.5 | 48.5 | 48.5 | 48.5 | 48.5 |

### [Production Example 2]

### (Production of Non-White Ink)

### (2-1. Preparation of Pigment Dispersion)

A color (cyan) pigment dispersion was prepared by a method similar to that for Production Example 1, except that a blue pigment (Pigment Blue 15:03) was used instead of a white pigment.

### (2-2. Preparation of Ink)

30 mass% of propylene glycol, 10 mass% of butyl triglycol, 1 mass% of surfactant (Surfynol 104, produced by Nisshin Chemical Industry Co., Ltd.), and 0.5 mass% of a 1% aqueous solution of sodium hydroxide were measured in a beaker. Next, the cyan pigment dispersion obtained as described under 2-1 above and the resin particle dispersion liquid (Superflex 130, produced by DKS Co., Ltd.) shown as A-2 in Table 1 were measured so as to contain 5 mass% of the pigment dispersion and 5 mass% of the binder resin, and water was added to make the total 100 mass%. Then the contents of the beaker was stirred at a rotation rate of 400 rpm using a stirrer (Three-One Motor BL-600, produced by Shinto Scientific Co., Ltd.) to evenly mix the contents. The mixture liquid was filtered with a filter (with a mesh size of 5 µm) to remove foreign matter and coarse particles contained in the mixture liquid. In this way, non-white ink (cyan ink) was obtained.

### [Evaluation of Blotting with Ink, Abrasion Resistance, and Base Material Quality]

Using White Inks I-1 to I-7 of Production Example 1 and the non-white ink (cyan ink) of Production Example 2, images were formed to evaluate blotting with ink, abrasion resistance, and base material quality. The test machine used for the evaluation was an inkjet recording device as shown in Fig. 1, which included piezoelectric inkjet heads (KJ4B-1200, produced by Kyocera Corporation) for discharging the white and non-white inks.

Using the test machine described above, printing was performed under the following conditions: head application voltage, 21 V; drive frequency, 20 kHz; ejected amount of liquid droplet, 3 pl; print head temperature, 32°C; print head resolution, 1200 dpi; and number of times of pre-ejection flushing, 1000 times. As the printing base material, OPP film (TORAYFAN, produced by Toray Industries, Inc.), which was a non-absorbent base material, was used.

### <Evaluation Method>

### (Blotting with Ink)

Print results of Present Disclosure 1 to 9 and Comparative Examples 1 to 12 were produced by, while changing the white ink and the drying temperatures in the first and second drying processes, printing solid images of a horizontal stripe using the non-white ink on the printing base material having the white ink applied to it. The vertical length of the stripe (stripe width) in the print results of Present Disclosure 1 to 9 and Comparative Examples 1 to 12 were measured. On the other hand, as a comparative reference example (reference image), the same solid image of a horizontal stripe was printed on a specially treated polyethylene terephthalate (PET) film (GT703, produced by Toyobo Co., Ltd.) with fine pores and free from blotting, and the vertical length of the stripe was measured in the same way. The rate of increase in the vertical length of the stripe compared to the reference image was evaluated as the size of blotting with ink.

### (Evaluation Criteria)

Good: the rate of increase in the vertical length of the stripe was less than 3%.
Average: the rate of increase in the vertical length of the stripe was 3% or more but less than 5%.
Poor: the rate of increase in the vertical length of the stripe was 5% or more but less than 10%.

### (Abrasion Resistance)

Print results of Present Disclosure 1 to 9 and Comparative Examples 1 to 12 were visually inspected to check the peeling-off of ink after its being rubbed once with a 1000 g weight.

### (Evaluation Criteria)

Excellent: no peeling-off of ink was observed.
Good: peeling-off of 5% or less of ink was observed.
Average: peeling-off of 10% or less ink was observed.
Poor: peeling-off of more than 10% of ink was observed.

### (Base Material Quality)

Print results of Present Disclosure 1 to 9 and Comparative Examples 1 to 12 were visually inspected to evaluate the quality of the printing base material (OPP sheet).

### (Evaluation Criteria)

Good: quality of OPP sheet remained unchanged as before printing.
Average: OPP sheet is slightly twisted compared to before printing.
Poor: OPP sheet is notably twisted compared with before printing.

The results of evaluation of blotting with ink, abrasion resistance, and base material quality are shown in Table 3, along with the types of white ink used and the drying conditions.

**[Table 3]**

| | White Ink | Drying Process | | Blotting with Ink | Abrasion Resistance | Base Material Quality |
|---|---|---|---|---|---|---|
| | | 1st Drying Process | 2nd Drying Process | | | |
| Present Disclosure 1 | I-3 | 50 | 80 | Good | Good | Good |
| Present Disclosure 2 | I-7 | 30 | 80 | Good | Excellent | Good |
| Present Disclosure 3 | I-3 | 55 | 80 | Good | Good | Good |
| Present Disclosure 4 | I-3 | 60 | 80 | Good | Good | Good |
| Present Disclosure 5 | I-2 | 50 | 80 | Good | Good | Good |
| Present Disclosure 6 | I-4 | 50 | 80 | Good | Good | Good |
| Present Disclosure 7 | I-4 | 55 | 80 | Good | Good | Good |
| Present Disclosure 8 | I-4 | 60 | 80 | Good | Good | Good |
| Present Disclosure 9 | I-4 | 65 | 80 | Good | Good | Good |
| Comparative Example1 | I-1 | 50 | 80 | Average | Good | Good |
| Comparative Example2 | I-1 | 55 | 80 | Average | Good | Good |
| Comparative Example3 | I-1 | 60 | 80 | Poor | Good | Good |
| Comparative Example4 | I-2 | 55 | 80 | Average | Good | Good |
| Comparative Example5 | I-2 | 60 | 80 | Poor | Good | Good |
| Comparative Example6 | I-3 | 80 | 80 | Poor | Good | Good |
| Comparative Example7 | I-3 | 80 | 90 | Poor | Good | Poor |
| Comparative Example8 | I-4 | 80 | 80 | Poor | Good | Good |
| Comparative Example9 | I-4 | 80 | 90 | Poor | Good | Poor |
| Comparative Example10 | I-5 | 60 | 80 | Good | Poor | Good |
| Comparative Example11 | I-6 | 60 | 80 | Good | Poor | Good |
| Comparative Example12 | I-6 | 60 | 90 | Good | Poor | Poor |

As will be understood from Table 3, Present Disclosure 1 to 9, in which urethan resin particles (first resin particles) with a minimum film formation temperature of 40 to 80°C were added to the white ink, the drying temperature in the first drying process was lower than the minimum film formation temperature of the first resin particles in the white ink, and the drying temperature in the second drying process was equal to or higher than the minimum film formation temperature of the first resin particles and the second resin particles in the non-white ink all proved to be satisfactory: the rate of increase in the vertical length of the stripe in the print result was less than 3% , no peeling-off of ink was observed after its being rubbed with a 1000 g weight, and no quality deterioration of the OPP sheet as the printing base material was observed.

In contrast, in all of Comparative Examples 1 to 9, in which the drying temperature in the first drying process was set equal to or higher than the minimum film formation temperature of the first resin particles in the white ink, the rate of increase in the vertical length of the stripe in the print result was 3% or more. The reason for this is considered to be that, as a result of the first resin particles contained in the white ink starting to form a film early and preventing evaporation of moisture, the drying of the white ink during printing with non-white ink was insufficient. In Comparative Examples 7 and 9, in which the drying temperature in the second drying process was set to 90°C, the OPP sheet as the printing base material was notably twisted compared with before printing.

In Comparative Examples 10 to 12, in which acrylic and polyamide elastomer resin particles are added to the white ink instead of urethane resin particles, peeling-off of more than 10% of ink was observed after the printed result was rubbed with a 1000 g weight. The reason for this is considered to be that, Comparative Examples 10 to 12, in which the drying temperature in the second drying process was set equal to or lower than the minimum film formation temperatures of the resin particles (first resin particles) in the white ink and the resin particles (second resin particles) in the non-white ink, due to insufficient heating, the resin did not form a film with satisfactory coating quality and the abrasion resistance was insufficient.

The results of Present Disclosure 1 to 9 and Comparative Examples 1 to 12 reveal that, by adding first resin particles with a minimum film formation temperature of 40 to 80°C to the white ink, adding second resin particles with a minimum film formation temperature of 35 to 80°C to the non-white ink, setting the drying temperature in the first drying process lower than the minimum film formation temperature of the first resin particles, and setting the drying temperature in the second drying process equal to or higher than the higher of the minimum film formation temperatures of the first and second resin particles, it is possible to effectively prevent blotting with ink and to improve the abrasion resistance of the print result. The results also reveal that, by setting the drying temperature in the second drying process to 80°C or less, even if the printing base material is an OPP sheet, which is prone to thermal deterioration, it is possible to prevent twisting of the OPP sheet after printing.

The present disclosure is applicable to inkjet recording apparatuses that eject ink onto a recording medium. Based on the present disclosure, it is possible to provide an inkjet recording apparatus that can prevent blotting with non-white ink due to insufficient drying of the white ink applied to the recoding medium and that can improve the abrasion resistance of the ink after printing.

The above embodiments of the invention as well as the appended claims and figures show multiple characterizing features of the invention in specific combinations. The skilled person will easily be able to consider further combinations or sub-combinations of these features in order to adapt the invention as defined in the claims to his specific needs.

## Claims

1. An inkjet recording apparatus (100), comprising at least:
a conveyance portion (1) that conveys a recording medium;
an application portion (2) that applies white ink to the recoding medium (S) conveyed by the conveyance portion (1);
a first drying portion (5) arranged downstream of the application portion (2) with respect to a conveyance direction of the recoding medium (S), the first drying portion drying the white ink applied to the recoding medium (S) by the application portion (2);
a recording portion (3) arranged downstream of the first drying portion (5) with respect to the conveyance direction of the recoding medium (S), the recording portion ejecting non-white ink onto the recording medium (S); and
a second drying portion (6) arranged downstream of the recording portion (3) with respect to the conveyance direction of the recoding medium (S), the second drying portion drying the non-white ink applied to the recoding medium (S) by the recording portion (3);
**characterized in that**
the white ink contains first resin particles with a minimum film formation temperature of 40°C or more but 80°C or less,
the non-white ink contains second resin particles with a minimum film formation temperature of 80°C or less, and
when the minimum film formation temperature of the first resin particles is a first minimum film formation temperature and the minimum film formation temperature of the second resin particles is a second minimum film formation temperature, a drying temperature in the first drying portion (5) is lower than the first minimum film formation temperature and a drying temperature in the second drying portion (6) is equal to or higher than the first and second minimum film formation temperatures.

2. The inkjet recording apparatus (100) according to claim 1, **characterized in that**:
the second resin particles have a minimum film formation temperature of 35°C or more.

3. The inkjet recording apparatus (100) according to claim 1, **characterized in that**
the white ink contains 1,4-dioxane.

4. The inkjet recording apparatus (100) according to claim 1, **characterized in that**
the application portion (2) has a first recording head (2a) that ejects the white ink and the recording portion (3) has one or more second recording heads (3a-3d) that eject the non-white ink.

5. The inkjet recording apparatus (100) according to claim 1, **characterized in that**
the recoding medium (S) is a sheet of resin, and
the inkjet recording apparatus further includes a corona treatment portion (9) that is arranged upstream of the application portion (2) with respect to the conveyance direction of the recoding medium (S) and that performs corona discharge treatment on the sheet.

6. The inkjet recording apparatus (100) according to any one of claims 1 to 5, **characterized in that**
the recoding medium (S) is a sheet of biaxially oriented polypropylene, and
the drying temperature (6) in the second drying portion is 80°C or less.
